(19) **Europäisches Patentamt**

**European Patent Office**

**Office européen des brevets**

(11) Veröffentlichungsnummer: **0 309 705 B1**

(12) **EUROPÄISCHE PATENTSCHRIFT**

(45) Veröffentlichungstag der Patentschrift: **08.07.92**

(21) Anmeldenummer: **88113118.9**

(22) Anmeldetag: **12.08.88**

(51) Int. Cl.⁵: $G11B\ 7/09$

(54) **Verfahren und Gerät zur Kompensation der Off-Set-Spannung eines Regelverstärkers.**

(30) Priorität: **30.09.87 DE 3732924**

(43) Veröffentlichungstag der Anmeldung:
**05.04.89 Patentblatt 89/14**

(45) Bekanntmachung des Hinweises auf die
Patenterteilung:
**08.07.92 Patentblatt 92/28**

(84) Benannte Vertragsstaaten:
**AT BE CH DE ES FR GB GR IT LI LU NL SE**

(56) Entgegenhaltungen:
**EP-A- 0 260 987**
**GB-A- 2 110 843**

**PATENT ABSTRACTS OF JAPAN, Band 7, Nr.**
**138 (P-204)[1283], 16. Juni 1983; & JP-A-58 53**
**030**

**PATENT ABSTRACTS OF JAPAN, Band 9, Nr.**
**195 (P-379)[1918], 13. August 1985; & JP-A-60**
**61 925**

(73) Patentinhaber: **Deutsche Thomson-Brandt**
**GmbH**
**Hermann-Schwer-Strasse 3 Postfach 1307**
**W-7730 Villingen-Schwenningen(DE)**

(72) Erfinder: **Baas, Dieter**
**Sofienstrasse 10**
**W-7640 Kehl(DE)**

**Beschreibung**

Die Erfindung betrifft ein Verfahren zur Kompensation der Off-Set-Spannung eines Regelverstärkers in einem Gerät zur Wiedergabe von Daten, die mittels einer optischen Abtastvorrichtung aus den Datenspuren eines Aufzeichnungsträgers lesbar sind, indem mindestens ein Lichtstrahl auf den Aufzeichnungsträger mittels eines Fokusregelkreises fokussierbar und mittels eines Spurregelkreises auf den Datenspuren führbar ist, indem der Lichtstrahl vom Aufzeichnungsträger auf einen Photodetektor reflektiert wird, mittels dem ein elektrisches Datensignal, ein Fokusfehlersignal als Ist-Wert für den Fokusregelkreis und ein Spurfehlersignal als Ist-Wert für den Spurrepelkreis erzeugt werden.

Die Erfindung betrifft ebenfalls das Gerät zur Wiedergabe von Daten.

Derartige Geräte, z.B. CD-Spieler, magneto-optische Geräte zur Wieder- gabe und Aufzeichnung, Aufzeichnungs- und Wiedergabegeräte für Draw-Discs oder Videoplattenspieler, sind mit einer optischen Abtastvorrichtung, bestehend aus einer Laserdiode, mehreren Linsen, einem Prismenstrahlteiler und einem Photodetektor ausgestattet. Aufbau und Funktion einer optischen Abtastvorrichtung, eines sogenannten optical-pick-ups, sind in electronic components & applications, Vol. 6, No. 4, 1984 auf Seite 209 - 215 beschrieben.

Der von der Laserdiode ausgesendete Lichtstrahl wird mittels Linsen auf die CD-Platte fokussiert und von dort auf einen Photodetektor reflektiert. Aus dem Ausgangssignal des Photodetektors werden die auf der CD-Platte gespeicherten Daten und der Ist-Wert für den Fokus- und für den Spurregelkreis gewonnen. In der genannten Literaturstelle wird der Ist-Wert für den Fokusregelkreis als focusing error bezeichnet, während für den Ist-Wert des Spurregelkreises der Ausdruck radial tracking error gewählt ist.

Als Stellglied für den Fokusregelkreis dient eine Spule, über deren Magnetfeld eine Objektivlinse entlang der optischen Achse bewegbar ist. Der Fokusregelkreis bewirkt nun durch Verschieben der Objektivlinse, daß der von der Laserdiode ausgesendete Lichtstrahl stets auf die CD-Platte fokussiert wird. Mittels des Spurregelkreises, der oft auch als Radialantrieb bezeichnet wird, ist die optische Abtastvorrichtung bezüglich der CD-Platte in radialer Richtung verschiebbar. Dadurch kann der Lichtstrahl auf den spiralförmigen Datenspuren der CD-Platte geführt werden.

Bei einigen Geräten ist der Radialantrieb aus einem sogenannten Grob- und einem sogenannten Feinantrieb aufgebaut. Der Grobantrieb ist beispielsweise als Spindel ausgeführt, mittels der die gesamte optische Abtastvorrichtung aus der Laserdiode, den Linsen, dem Prismenstrahlteiler und dem Photodetektor radial verschiebbar ist. Mit dem Feinantrieb ist der Lichstrahl in radialer Richtung z.B. um einen vorgebbaren kleinen Winkel kippbar, so daß der Lichtstrahl allein durch diese Kippbewegung ein kleines Stück entlang einem Radius der CD-Platte fahren kann.

Um eine einwandfreie Wiedergabe der Daten, seien es nun z.B. Bild und Ton bei einem Videoplattenspieler oder bloß der Ton bei einem CD-Spieler, zu erzielen, ist neben einer genauen Fokussierung des Lichtstrahls auf die Video- bzw. CD-Platte eine präzise Führung entlang den Datenspuren der Platte erforderlich. Der Regelverstärker des Fokus- und des Spurregelkreises ist aber wie jeder andere Regelverstärker auch mit einer Off-Set-Spannung behaftet, deren Größe einerseits von der Temperatur abhängt und andererseits einer langfristigen Drift unterliegt. Die langfristige Drift der Off-Set-Spannung wie auch anderer Parameter eines Verstärkers werden durch Alterung des Verstärkers verursacht.

Damit die Datenwiedergabe nicht durch die Off-Set-Spannung des Regelverstärkers des Fokus- und/oder des Spurregelkreises gestört wird, ist eine Kompensation der Off-Set-Spannungen beider Regelverstärker nötig. Durch manuelles Einstellen eines im Regelkreis vorgesehenen Abgleichpotentiometers läßt sich eine Kompensation jedoch nur näherungsweise durchführen, weil Änderungen der Off-Set-Spannung infolge Temperaturschwankungen und infolge Alterung des Regelverstärkers unberücksichtigt bleiben.

Es ist daher Aufgabe der Erfindung, ein Verfahren und ein Gerät zur Datenwiedergabe gemäß der Oberbegriffe der Ansprüche 1 und 3 so zu gestalten, daß die Off-Set-Spannung des Regelverstärkers im Fokus- und/oder im Spurregelkreis automatisch während des Betriebs kompensiert wird.

Die Erfindung löst diese Aufgabe dadurch, daß zur Kompensation der Off-Set-Spannung des Regelverstärkers (FR, TR) des Fokusregelkreises und/oder Spurregelkreises den Fokus- und/oder Spurregelkreis Meßimpulse alternierender Polarität aufgeprägt werden, daß die Zeiten, die vergehen, bis die Impulsantworten zweier aufeinanderfolgender Meßimpulse unterschiedlicher Polarität einen vorgebbaren Schwellwert erreichen, gemessen und miteinander verglichen werden und daß eine Off-Set-Kompensationsspannung an einem Eingang des Regelverstärkers (FR, TR) des Fokus- und/oder Spurregelkreises so lange verändert wird, bis die miteinander verglichenen Zeiten gleich groß werden.

Weiterhin wird die Aufgabe durch das Gerät gemäß Anspruch 3 gelöst.

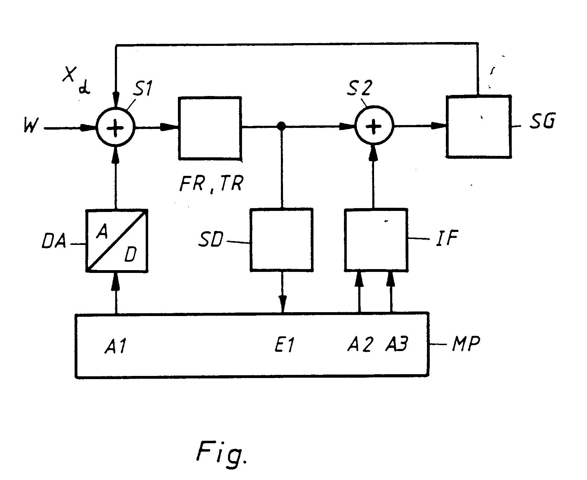

Anhand des in der Figur gezeigten Ausführungsbeispieles wird die Erfindung nun erläutert.

Der Eingang des Regelverstärkers FR bzw. TR für den Fokus- bzw. Spurregelkreis ist mit dem Ausgang einer ersten Summationsstelle S1 verbunden, deren erstem Eingang die Führungsgröße W zugeführt wird, deren zweiter Eingang mit dem Ausgang des Stellgliedes SG und deren dritter Eingang mit dem Ausgang eines Digital-Analog-Wandlers DA verbunden ist. Der Ausgang des Regelverstärkers FR bzw. TR ist mit dem Eingang eines Schwellwertdetektors SD und mit dem ersten Eingang einer Summationsstelle S2 verbunden, deren Ausgang mit dem Eingang des Stellgliedes SG verbunden ist. Der Eingang des Digital-Analog-Wandlers DA ist mit dem Ausgang A1 einer Steuereinheit MP verbunden, deren Ausgänge A2 und A3 mit den Eingängen eines Impulsformers IF verbunden sind. Der Ausgang des Schwellwertdetektors SD ist mit dem Eingang E1 der Steuereinheit MP verbunden. Der Ausgang des Impulsformers IF ist mit dem zweiten Eingang der Summationsstelle S2 verbunden.

Die Steuereinheit MP, für die sich ein Mikroprozessor besonders gut eignet, gibt zunächst an ihrem Ausgang A2 ein Signal ab, das beim Impulsformer IF die Abgabe eines Meßimpulses mit positiver Polarität bewirkt. Der Mikroprozessor MP speichert nun die Zeit, die von der Abgabe des Meßimpulses vergeht, bis die Antwort auf diesen Meßimpuls den beim Schwellwertdetektor SD eingestellten Schwellwert überschreitet. Anschließend gibt der Mikroprozessor MP ein Signal an seinem Ausgang A3 ab, das beim Impulsformer IF die Abgabe eines Meßimpulses negativer Polatität bewirkt. Der Mikroprozessor MP speichert nun wieder die Zeit, die von der Abgabe dieses Meßimpulses negativer Polarität vergeht, bis die Antwort auf ihn den beim Schwellwertdetektor SD eingestellten Schwellwert überschreitet. Die beiden gemessenen Zeiten werden nun im Mikroprozessor MP miteinander verglichen. Stimmen sie nicht überein, so ändert der Mikroprozessor MP den digitalen Wert an seinem Ausgang A1, den der Digital-Analog-Wandler DA als analoge Off-Set-Kompensationsspannung an den Eingang des Regelverstärkers FR bzw. TR legt. Anschließend gibt der Impulsformer IF wieder einen Meßimpuls positiver und negativer Polarität auf den Fokus- bzw. auf den Spurregelkreis. Es werden wieder die Zeiten gemessen und miteinander verglichen, die vergehen, bis die Impulsantworten den Schwellwert des Schwellwertdetektors SD überschreiten. Dieses Verfahren wird so lange fortgesetzt, bis die jeweils miteinander verglichenen Zeiten gleich groß sind. Dann liegt die richtige Off-Set-Kompensationsspannung am Eingang des Regelverstärkers FR bzu. TR.

Wie im Anspruch 2 angegeben ist, kann der Mikroprozessor MP zunächst beim Impulsformer IF die Abgabe von n Meßimpulsen positiver Polarität bewirken und aus den Zeiten, welche die Impulsantworten benötigen, um den Schwellwert zu überschreiten, einen Mittelwert zu bilden.

Anschließend gibt der Impulsformer IF n Meßimpulse negativer Polarität auf den Fokus- bzw. Spurregelkreis. Ebenso wie bei den n Meßimpulsen positiver Polarität wird nun bei den Antworten auf die n Meßimpulse negativer Polarität der Mittelwert aus den gemessenen Zeiten gebildet. So lange die beiden Mittelwerte nicht übereinstimmen, wird das Verfahren fortgesetzt und jedesmal die analoge Off-Set-Kompensationsspannung am Eingang des Regelverstärkers FR bzw. TR geändert, bis schließlich die beiden Mittelwerte übereinstimmen, denn dann liegt am Eingang des Regelverstärkers FR bzw. TR die richtige Off-Set-Kompensatinsspannung an.

Weil die Kompensation der Off-Set-Spannung beim Regelverstärker FR und/oder TR des Fokus- und/oder Spurregelkreises während des Betriebs vorgenommen wird, entfallen nicht nur die teuren und lästigen Einstellarbeiten von Hand bei der Produktion, sondern es wirken sich langfristige Driften der Off-Set-Spannung infolge Alterung der Bauteile oder infolge Temperaturschwankungen nicht mehr nachteilig aus.

Die Erfindung ist für CD-Spieler, Draw-Disc-Spieler, magneto-optische Geräte und Videoplattenspieler geeignet.

## Patentansprüche

1. Verfahren zur Kompensation der Off-Set-Spannung eines Regelverstärkers (FR, TR) in einem Gerät zur Wiedergabe von Daten, die mittels einer optischen Abtastvorrichtung aus den Datenspuren eines Aufzeichnungsträgers lesbar sind, indem mindestens ein Lichtstrahl auf den Aufzeichnungsträger mittels eines Fokusregelkreises fokussierbar und mittels eines Spurregelkreises auf den Datenspuren führbar ist, indem der Lichtstrahl vom Aufzeichnungsträger auf einen Photodetektor reflektiert wird, mittels dem ein elektrisches Datensignal, ein Fokusfehlersignal als Ist-Wert für den Fokusregelkreis und ein Spurfehlersignal als Ist-Wert für den Spurregelkreis erzeugt werden, **dadurch gekennzeichnet,** daß zur Kompensation der Off-Set-Spannung des Regelverstärkers (FR, TR) des Fokus- und/oder Spurregelkreises dem Fokus- und/oder Spurregelkreis Meßimpulse alternierender Polarität aufgeprägt werden, daß die Zeiten, die vergehen, bis die Impulsantworten zweier aufeinanderfolgender Meßimpulse unterschiedlicher Polarität einen vorgebbaren Schwellwert erreichen, gemessen und miteinander verglichen werden und daß eine Off-Set-Kompensationsspannung an einem Eingang des Regelverstärkers (FR, TR) des Fokus- und/oder Spurregelkreises so lange verändert wird, bis die miteinander verglichenen Zeiten gleich groß werden.

2. Verfahren nach Anspruch 1, **dadurch gekennzeichnet,** daß dem Fokus- und/oder Spurregelkreis n Meßimpulse der einen Polarität aufgeprägt werden und aus den gemessenen Zeiten ein erster Mittelwert gebildet wird, daß anschließend dem Fokus- und/oder Spurregelkreis n Meßimpulse der entgegengesetzten Polarität aufgeprägt werden und aus den gemessenen Zeiten ein zweiter Mittelwert gebildet wird, daß dieses Verfahren so lange wiederholt und die Off-Set-Kompensationospannung am einen Eingang des Regelverstärkers (FR, TR) des Fokus- und/oder Spurregelkreises so lange verändert wird, bis der erste Mittelwert mit dem zweiten Mittelwert übereinstimmt.

3. Gerät zur Wiedergabe von Daten, die mittels einer optischen Abtastvorrichtung aus den Datenspuren eines Aufzeichnungsträgers lesbar sind, indem mindestens ein Lichtstrahl auf den Aufzeichnungsträger mittels eines Fokusregelkreises fokussierbar und mittels eines Spurregelkreises auf den Datenspuren führbar ist, indem der Lichtstrahl vom Aufzeichnungsträger auf einen Photodetektor reflektiert wird, mittels dem ein elektrisches Datensignal, ein Fokusfehlersignal als Ist-Wert für den Fokusregelkreis und ein Spurfehlersignal als Ist-Wert für den Spurregelkreis erzeugt werden, **dadurch gekennzeichnet,** daß die Führunggröße (W) dem ersten Eingang einer Summationsstelle (S1) zugelführt wird und daß der Ausgang dieser ersten Summationsstelle (S1) mit dem Eingang des Regelverstärkers (FR, TR) verbunden ist, dessen Ausgang mit dem ersten Eingang einer zweiten Summationsstelle (S2) und mit dem Eingang eines Schwellwertdetektors (SD) verbunden ist, daß der Ausgang der zweiten Summationsstelle (S2) mit dem Eingang des Stellgliedes (SG) verbunden ist, dessen Ausgang mit dem zweiten Eingang der ersten Summationsstelle (S1) verbunden ist, daß der erste Ausgang (A1) einer Steuereinheit (MP) über einen Digital-Analog-Wandler (DA) mit dem dritten Eingang der ersten Summationsstelle (S1) verbunden ist, daß der zweite Ausgang (A2) und der dritte Ausgang (A3) der Steuereinheit (MP) mit je einem Eingang eines Impulsformers (IF) verbunden ist, dessen Ausgang mit dem zweiten Eingang der zweiten Summationsstelle (S2) verbunden ist, und daß der Ausgang des Schwellwertdetektors (SD) mit dem Eingang (E1) der Steuereinheit (MP) verbunden ist.

## Claims

1. Method for compensating the off-set voltage of a servo amplifier (FR, TR) in an apparatus for the reproduction of data which is readable by means of an optical scanning device from the data tracks of a record carrier wherein at least one light beam is focusable on the record carrier by means of a focusing control loop and is guidable onto the data tracks by means of a tracking control loop, wherein the light beam is reflected from the record carrier onto a photo-detector by means of which an electrical data signal, a focusing-error signal serving as the control value for the focusing control loop and a tracking-error signal serving as the control value for the tracking control loop are produced, characterised in that, for compensating the off-set voltage of the servo amplifier (FR, TR) in the focusing and/or the tracking control loop, test pulses of alternating polarity are impressed on the focusing and/or the tracking control loop, that the times which elapse until the pulse responses of two successive test pulses of different polarity reach a predetermined threshold are measured and compared with each other and that an off-set compensating voltage is altered at one input of the servo amplifier (FR, TR) in the focusing and/or the tracking control loop until such time as the times which are being compared with each other are of equal magnitude.

2. Method according to Claim 1 characterised in that n test pulses of one polarity are impressed on the focusing and/or the tracking control loop and that a first average value is formed from the measured times, that thereafter n test pulses of the opposite polarity are impressed on the focusing and/or the tracking control loop and that a second average value is formed from the measured times, that this process is repeated and the off-set compensating voltage at one input of the servo amplifier (FR, TR) in the focusing and/or the tracking control loop is altered until such time as the first average value matches the second average value.

3. Apparatus for the reproduction of data which is readable by means of an optical scanning device from the data tracks of a record carrier wherein at least one light beam is focusable on the record carrier by means of a focusing control loop and is guidable onto the data tracks by means of a tracking control loop, wherein the light beam is reflected from the record carrier onto a photo-detector by means of which an electrical data signal, a focusing-error signal serving as the control value for the focusing control loop and a tracking-error signal serving as the control value for the tracking control loop are produced, characterised in that, the control value (W) is applied to the input of a first summing point (S1) and that the output of this first summing point (S1) is connected to the input of the servo amplifier (FR, TR) whose output is connected to the first input of a second summing point (S2) and to the input of a threshold detector SD, that the output of the second summing point (S2) is connected to the input of the adjusting member (SG) whose output is connected to the second input of the first summing point (S1), that the first output (A1) of a control unit (MP) is connected via a digital/analogue converter (DA) to the third input of the first summing point (S1), that the second output (A2) and the third output (A3) of the control unit (MP) are each connected to a respective input of a pulse shaper (IF) whose output is connected to the second input of the second summing point (S2), and that the output of the threshold detector (SD) is connected to the input (E1) of the control unit (MP).

**Revendications**

1. Procédé pour la compensation de la tension offset d'un amplificateur de réglage (FR, TR) dans un appareil pour la reproduction de données qui peuvent être lues au moyen d'un dispositif de balayage optique sur les pistes de données d'un support d'enregistrement, au moins un faisceau lumineux pouvant être focalisé sur le support d'enregistrement au moyen d'un circuit de réglage de foyer et pouvant être guidé sur les pistes de données au moyen d'un circuit de réglage de piste, le faisceau lumineux étant réfléchi par le support d'enregistrement sur un détecteur photoélectrique au moyen duquel sont produits un signal électrique de données un signal d'erreur de foyer comme valeur nominale pour le circuit de réglage de foyer et un signal d'erreur de piste comme valeur nominale pour le circuit de réglage de pistes, **caractérisé en ce** que, pour la compensation de la tension offset de l'amplificateur de réglage (FR, TR) du circuit de réglage du foyer et/ou du circuit de réglage de piste, des impulsions de mesure de polarité alternée sont appliquées au circuit de réglage de foyer et/ou de piste, que les temps qui passent jusqu'à ce que les impulsions de réponse de deux impulsions de mesure de différente polarité qui se succèdent atteignent un seuil qui peut être prédéterminé sont mesurés et comparés les uns aux autres et qu'une tension de compensation de tension offset est modifiée à une entrée de l'amplificateur de réglage (FR, TR) du circuit de réglage de foyer et/ou de piste jusqu'à ce que les temps comparées soient de même grandeur.

2. Procédé selon la revendication 1, **caractérisé en ce** que n impulsions de mesure de l'une des polarités sont appliquées au circuit de réglage de foyer et/ou de piste et qu'une première moyenne est formée à partir des temps mesurés, qu'ensuite n impulsions de mesure de la polarité inverse sont appliquées au circuit de réglage de foyer et/ou de piste et qu'une seconde moyenne est formée à partir des temps mesurés, que ce processus est répété et que la tension de compensation de tension offset est modifiée à l'une des sorties de l'amplificateur de réglage (FR, TR) du circuit de réglage de foyer et/ou de piste jusqu'à ce que la première moyenne coïncide avec la seconde moyenne.

3. Appareil pour la reproduction de données qui peuvent être lues au moyen d'un dispositif de balayage optique à partir des pistes de données d'un support d'enregistrement, au moins un faisceau lumineux pouvant être focalisé sur le support d'enregistrement au moyen d'un circuit de réglage de foyer et pouvant être guidé sur les pistes de données au moyen d'un circuit de réglage de pistes, le faisceau lumineux étant réfléchi par le support d'enregistrement sur un détecteur photoélectrique au moyen duquel sont produits un signal électrique de données, un signal d'erreur de foyer comme valeur nominale pour le circuit de réglage de foyer et un signal d'erreur de piste comme valeur nominale pour le circuit de réglage de pistes, **caractérisé en ce** que la grandeur de commande (W) est amenée à la première entrée d'un endroit addeur (S1) et que la sortie de ce premier endroit addeur (S1) est reliée à t'entrée de l'amplificateur de réglage (FR, TR) dont la sortie est reliée à la première entrée d'un second endroit addeur (S2) et à l'entrée d'un détecteur de seuil (SD), que la sortie du second endroit addeur (S2) est reliée à l'entrée du composant de réglage (SG) dont la sortie est reliée à la seconde entrée du premier endroit addeur (S1), que la première sortie (A1) d'une unité de commande (MP) est reliée par un convertisseur numérique-analogique (DA) à la troisième entrée du premier endroit addeur (S1), que la seconde entrée (A2) et la troisième sortie (A3) de l'unité de commande (MP) sont reliées chacune à une entrée d'un formateur d'impulsions (IF) dont la sortie est reliée à la seconde entrée du second endroit addeur (S2) et que la sortie du détecteur de seuil (SD) est reliée à l'entrée (E1) de l'unité de commande (MP).

Fig.